# EUROPÄISCHE PATENTANMELDUNG

(11) **EP 2 461 453 A1**
(43) Veröffentlichungstag der Anmeldung: **06.06.2012**
(21) Anmeldenummer: 10015346.9
(22) Anmeldetag: 06.12.2010
(51) Int. Cl.: H02J 3/18, H02J 3/22, H02J 11/00

(54) **Blindleistungskompensation für Stellmotoren in einem Solar- oder Windkraftwerk**

(71) Anmelder: HAWE Hydraulik SE, 81673 München (DE)
(72) Erfinder: Hundschell, Hilarius, 84424 Isen (DE)
(74) Vertreter: Grünecker, Kinkeldey, Stockmair & Schwanhäusser

(57) **Zusammenfassung**

In einem Solar- oder Windkraftwerk (K), mit wenigstens einer wenigstens einem Feld (F) mit einer Vielzahl Solar- oder Windgeneratoren (G) zugeordneten Kraftwerkszentrale (Z), wobei die Generatoren zumindest zur Generatorverstellung Elektromotoren (M) aufweisen, die über Kupfer enthaltende Stromleitungen (4) in einem Niederspannungsnetz entweder mit der Kraftwerkszentrale (Z) oder/und einer zentralen Stromversorgung (S) verbunden sind, ist nahe bei jedem Elektromotor (M) oder jeweils einer Gruppe Elektromotoren (M) eine Blindleistungskompensationsanlage (B) mit kapazitiven Verbrauchern (19) vorgesehen.

## Beschreibung

Die Erfindung betrifft ein Solar- oder Windkraftwerk gemäß Oberbegriff des Patentanspruchs 1.

In jüngster Vergangenheit sind Solarkraftwerke in Andalusien / Spanien mit einer Leistung bis zu etwa 250 MW in Betrieb genommen worden, und nun wird sogar ein Solarkraftwerk mit einer Leistung bis zu etwa 500 MW oder sogar 1000 MW in Nordamerika (Blythe, Münchner Abendzeitung, 29.11.2010, Seite 76) geplant, wobei die Solargeneratoren bis zu etwa 300 m lange Parabolspiegel-Solarrinnen mit Absorberrohren sind, die jeweils dem Sonnenstand nachgeführt werden, und im Gefahrenfall in Staupositionen verstellt werden müssen. Das die Solargeneratoren enthaltende Feld kann eine Fläche bis zu 50 km² belegen. Zur Verstellung der Solargeneratoren werden Elektromotoren eingesetzt, beispielsweise in elektrohydraulischen Verstellvorrichtungen, die an eine Notstromversorgung oder zentrale Stromversorgung über Kupfer enthaltende Stromleitungen angeschlossen sind. Für ein Solarkraftwerk mit einer Leistung von bis zu 500 MW ist beispielsweise mit 3 MW-Notstrom- oder Stromversorgung erforderlich, das heißt es ist eine sehr hohe Stromleistung in einem Niederspannungsnetz über dann viele hunderte Kilometer lange Leitungen zu übertragen. Ähnliches gilt für Windkraftwerke mit beispielsweise sehr vielen Windturbinen (auf dem Land oder Offshore), die in großen Feldern mit großen Distanzen zur Stromversorgung aufgestellt sind und beispielsweise zur Rotorblattverstellung Elektromotoren aufweisen, die aus einem Niederspannungsnetz über lange Stromleitungen versorgt werden. Solar- oder Windkraftwerke haben hohe Anforderungen hinsichtlich Wartung oder Reparaturen zu erfüllen. Zum Beispiel werden mehrjährige störungsfreie Funktionen der Verstellvorrichtungen gefordert. Deshalb wird die Ausstattung jedes Generators zwar hochwertig, jedoch mit so wenig Fehlerquellen wie möglich gewählt. So ist es bisher in Solar- oder Windkraftwerke üblich, in dem Niederspannungsnetz Elektromotoren mit einem Leistungsfaktor zwischen 0,7 bis 0,8 (Kosinus des Phasenverschiebungswinkels ϕ; oder Verhältnis vom Betrag der Wirkleistung zur Scheinleistung) zu verwenden. Man hat sich in Solar- und Windkraftwerken Elektromotoren oder elektrohydraulischer Pumpenaggregate mit wenigstens einem Elektromotor bedient, wie sie sich seit Jahrzehnten beispielsweise in der Mobilhydraulik bestens bewährten. Bei diesen bewährten Elektromotoren war ein Kosinus ϕ zwischen etwa 0,7 und 0,8 wegen einer bordeigenen autarken Stromversorgung (Lichtmaschine, Batterie, wie in einem Flurförderfahrzeug oder Mobilkran kein Nachteil. Dieser relativ moderate Leistungsfaktor bedingt in dem Niederspannungsnetz mit den extrem langen Stromleitungen Übertragungsverluste, so dass der Leitungsquerschnitt entsprechend dimensioniert werden muss. Da traditionell Kupfer in den Stromleitungen verwendet wird, bedingen die großen Stromleitungslängen enorme Mengen Kupfer. Kupfer ist nicht nur ein sehr teures, und begrenzt verfügbares Buntmetall, sondern seine Gewinnung belastet die Umwelt stark.

Der Erfindung liegt die Aufgabe zugrunde, ein Solar- oder Windkraftwerk anzugeben, dessen Niederspannungsnetz umweltfreundlicher und kostengünstiger als bisher erstellbar ist.

Die gestellte Aufgabe wird mit den Merkmalen des Patentanspruchs 1 gelöst.

Durch die bei jedem Elektromotor oder zumindest einer Gruppe einander örtlich benachbarter (für denselben Generator G oder an benachbarten Antriebspylonen) Elektromotoren angeordnete Blindleistungskompensationsanlage wird der Leistungsfaktor oder Wirkfaktor optimiert bis nahe an 1,0, um die Übertragungsverluste in den Kupfer enthaltenden Stromleitungen des Niedrigspannungsnetzes weitgehend zu minimieren, so dass für einen bestimmten Leistungsbedarf die Leitungsquerschnitte reduziert werden können. Dies spart Kupfer ein, und zwar in einem Ausmaß, das bei einem einzigen Solar- oder Windkraftwerk viele 100 Tonnen oder mehr als 1000 Tonnen sein können. Das mit weniger Kupfer auskommende Niederspannnetz verbessert die Umweltfreundlichkeit und die Erstellungskosten des Solar- oder Windkraftwerks spürbar.

Es ist zwar bekannt, zur Verbesserung des Leistungsfaktors in kommunalen Niederspannungsnetzen an der Verbraucherseite für Elektromotoren Blindleistungskompensationsanlagen beispielsweise mit kapazitiven Verbrauchern vorzusehen, da nicht nur Großverbraucher die vom Blindstrom verursachte Blindarbeit oder der Blindleistungsverbrauch dem Energieversorgungsunternehmen bezahlen müssen. Die Blindleistungskompensation wird also primär an der Verbraucherseite zur Verbrauchskostenverminderung eingesetzt. (Internet: Leistungsfaktor-Wikipedia; Blindleistungskompensation-Wikipedia; www.energie.ch/blindstrom; Blindstrom-Wikipedia)

Bei einer zweckmäßigen Ausführungsform sind die Elektromotoren dreiphasige Drehstrommotoren, wobei für jede Phase als aktiver Blindleistungsfilter ein Kondensator einer

Motorwicklung parallel geschaltet ist. Dies führt zur Anhebung des Leistungsfaktors bis nahe zu 1,0, wodurch sich Übertragungsverluste minimieren lassen und für einen gegebenen Leistungsbedarf der Querschnitt der Stromleitungen verminderbar ist.

In einer Ausführungsform, in der der jeweilige Generator ein Solargenerator ist, und zwar beispielsweise mit einem vom Elektromotor, vorzugsweise elektrohydraulisch, verstellbaren, an wenigstens einem Antriebspylon montierten Parabolspiegel (Solarrinne) oder wenigstens einem Solarpaneel ist der Elektromotor mit der Blindleistungskompensationsanlage oder Einzelkompensation am Antriebspylonen installiert. Der Elektromotor ist über die Blindleistungskompensationsanlage an die gegebenenfalls extrem lange Stromleitung angeschlossen.

In einer anderen Ausführungsform ist der Generator eine Windkraftturbine zumindest mit vom Elektromotor, vorzugsweise elektrohydraulisch, verstellbaren Rotorblättern. Der Rotor ist in einer Turbinengondel angebracht, in welcher auch der Elektromotor mit der Blindleistungskompensationsanlage oder Einzelkompensation installiert ist. Die Stromleitung führt dann bis in die Turbinengondel.

In besonders zweckmäßigen Ausführungsformen ist der Elektromotor ein Unterölmotor in einem elektrohydraulischen Motorpumpenaggregat. Als kapazitive Verbraucher der Blindleistungskompensationsanlage oder einer Einzelkompensation sind Kondensatoren an, in oder bei dem Motorpumpenaggregat angeordnet, das heißt, so nahe wie möglich beim Elektromotor, der, vorzugsweise, ein Drehstrommotor sein kann. Das elektrohydraulische Motorpumpenaggregat ist somit gegenüber dem üblichen Konzept für die Mobilhydraulik durch die implementierte Blindleistungskompensation im Hinblick auf eine Verminderung des Querschnitts der Stromleitung modifiziert.

Das erfindungsgemäße Konzept ist zweckmäßig für Solar- oder Windkraftwerke, bei welchen das Feld eine Größe bis zu etwa 50 km² hat oder mehr, weil dann extrem lange Stromleitungen auch zu den Elektromotoren zu verlegen sind, die z. B. eine Nenn-Leistungsaufnahme bis zu etwa 1,5 kW haben können.

Da mit einem Leistungsfaktor ganz nahe bei 1,0 die Gefahr von Überspannungen oder Selbsterregung besteht, ist zweckmäßig über die der Blindleistungskompensationsanlage ein Leistungsfaktor (Kosinus des Phasenverschiebungswinkels ϕ) bis maximal etwa 0,98 eingestellt.

Anhand der Zeichnung werden Ausführungsformen der Erfindung erläutert. Es zeigen:
- Fig. 1: schematisch eine Draufsicht auf ein Solarkraftwerk mit wenigstens einem Feld, das eine Vielzahl Solargeneratoren enthält,
- Fig. 2: eine Detaildarstellung einer Ausführungsform eines Solargenerators,
- Fig. 3: einen vergrößerten Ausschnitt aus Fig. 2,
- Fig. 4: eine Schemadarstellung eines Teils eines Windkraftgenerators für ein Windkraftwerk, und
- Fig. 5: ein schematisiertes Schaltungsbild.

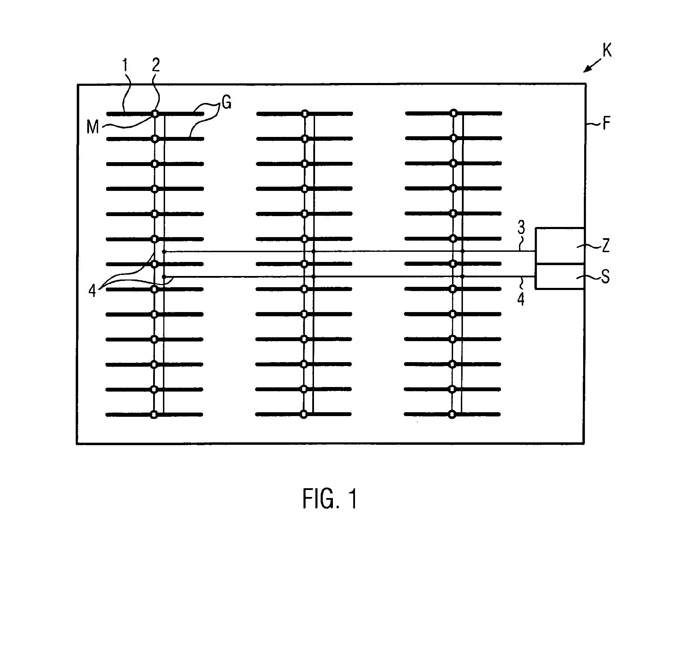

Ein Solarkraftwerk K in Fig. 1 umfasst beispielsweise ein Feld F in einem Landstrich mit intensiver Sonneneinstrahlung. Solche Solarkraftwerke K werden zur Zeit in Südspanien betrieben und erzeugen eine Stromleistung von bis maximal 250 MW. In Nordamerika (Blythe) ist ein Solarkraftwerk in Planung, das eine Stromleistung von etwa 500 MW bis zu 1000 MW haben wird, wobei dann zumindest ein Feld bis zu 50 km² groß ist, oder sogar noch größer. Zu dem Solarkraftwerk K gehört mindestens eine Kraftwerkzentrale Z, von der der z. B. über Turbinen erzeugte Strom in Hochspannungsleitungen eingespeist wird. Ferner ist wenigstens eine Stromversorgung S vorgesehen, die beispielsweise auch zur Notstromversorgung in einem 500 MW-Solarkraftwerk K eine Stromleistung von etwa 3 MW zu erbringen hat. In dem Feld F ist eine Vielzahl Solargeneratoren G jeweils auch auf Antriebspylonen 2 aufgestellt, wobei die Solargeneratoren G zumindest dem Sonnenstand nachgeführt werden, um eine optimale Leistungsausbeute zu erzielen. Darüber hinaus müssen die Solargeneratoren bei ungünstigen Witterungsbedingungen (Sturm oder dergleichen) in Verstaupositionen verstellt werden, und nach einem Sonnentag wieder in eine Morgenposition zurückgeführt werden. Für die Verstellung jedes Solargenerators G ist mindestens ein Elektromotor M vorgesehen, zweckmäßig ein Drehstrommotor, mit dem die Verstellung entweder auf mechanische oder, vorzugsweise, elektrohydraulische Weise durchgeführt wird. Zumindest die Elektromotoren M sind über ein Niederspannungsnetz mit Kupfer enthaltenden Stromleitungen 4 mit der Stromversorgung S verbunden, wobei mehrere Hunderte bis über Tausend Kilometer Stromleitungen 4 verlegt sind. Ferner sind die Solargeneratoren G über ein Leitungssystem 3 z. B. für erhitztes Wärmeträgermedium mit der Kraftwerkszentrale Z verbunden.

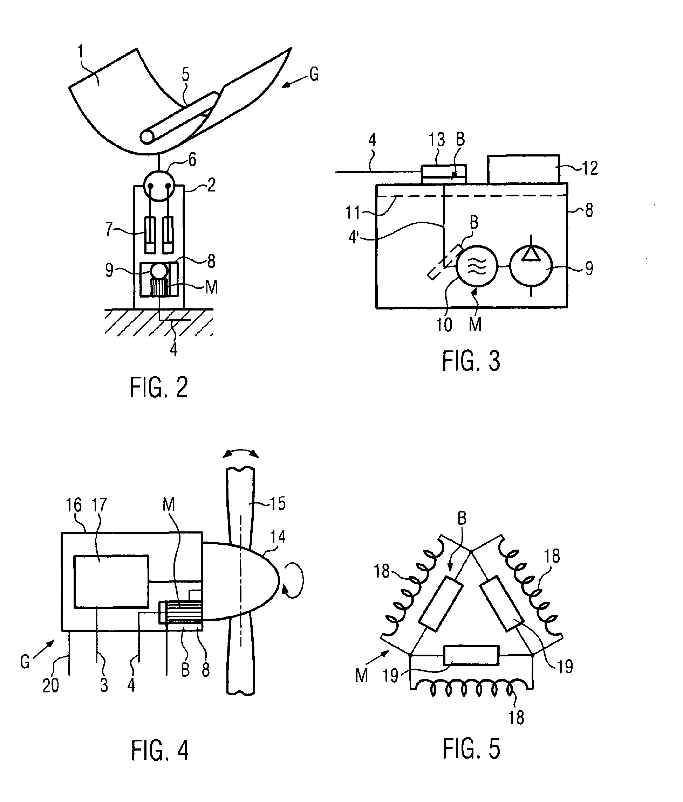

Fig. 2 verdeutlich eine Ausführungsform eines Solargenerators G in Form einer sogenannten Solarrinne mit einem Parabolspiegel 1, der beispielsweise 300 m lang oder noch länger ist, und im Brennpunktbereich ein Absorberrohr 5 enthält. Das Absorberrohr 5 enthält ein Wärmeträgermedium, das die gesammelte Wärme über das Leitungssystem 3 in die Kraftwerkszentrale Z einspeist, in der beispielsweise über Turbinen Strom erzeugt wird. An Stelle einer Solarrinne könnte auch ein Solarpaneel oder sogar ein Photovoltaik-Element vorgesehen sein.

Der in Fig. 2 gezeigte, z. B. im Wesentlichen vom Süden nach Norden ausgerichtete Parabolspiegel 1 ist über eine Drehverbindung 6 in dem auf dem Boden verankerten Antriebspylonen 2 drehverstellbar gelagert, und lässt sich beispielsweise durch zwei versetzt angreifende Hydraulikzylinder 7 z. B. in Schritten nach Westen dem Sonnenstand nachführen, nach Osten in eine Morgenposition rückführen, und bei ungünstigen Witterungsbedingungen in wenigstens eine geschützte Stauposition einstellen. Ferner kann eine Notfallverstellung ausgeführt werden, falls beispielsweise keine Stromleistung abgenommen werden kann, wofür der auf die Sonne ausgerichtete Parabolspiegel 1 dann beispielsweise über wenige Grad in Richtung nach Osten verstellt wird. Die im Feld F in Fig. 1 angedeuteten Solargeneratoren G sind so ausgerichtet, dass sie nur von Osten nach Westen der Sonne nachgeführt zu werden brauchen. Alternativ wäre es auch denkbar, gleichzeitig eine Nachführung mit mehr als nur einem Freiheitsgrad auszuführen, beispielsweise falls das Solarkraftwerk K dort erstellt ist, wo sich die Sonne von den Jahreszeiten abhängig in stark verschieden hohe Bahnen bewegt.

Zur Verstellung des Solargenerators G in Fig. 2 ist mindestens der eine Elektromotor M vorgesehen, der beispielsweise in ein elektrohydraulisches Motorpumpenaggregat 8 eingegliedert ist, und dann wenigstens eine Hydraulikpumpe 8 treibt, die über eine nicht dargestellte Steuerung die Hydraulikzylinder 7 betätigen lässt. Das Motorpumpenaggregat 8 hat im Regelfall ein Gehäuse, an oder in welchem der Elektromotor M installiert ist, der die innen angeordnete Pumpe 9 antreibt, wobei das Gehäuse gleichzeitig als Ölreservoir und Träger einer Ventileinrichtung 12 und einer Steuerung 13 (Fig. 3) dienen kann. Die Steuerung 13, vorzugsweise mit wenigstens einer Steuerplatine, ist beispielsweise in einem Klemmenkasten enthalten, zu dem die Stromleitung 4 führt.

Der Elektromotor M des in Fig. 3 gezeigten Motorpumpenaggregats 8 ist beispielsweise ein Drehstrommotor 10, der an die Steuerung 3 über eine Stromleitung 4' angeschlossen ist, und, vorzugsweise, als Unterölmotor ausgebildet und im im Pumpenaggregat 8 enthaltenen Hydrauliköl 11 durch dieses gekühlt innen im Gehäuse angeordnet ist. Dem Elektromotor M ist eine Blindleistungskompensationsanlage B zugeordnet, die entweder im Bereich der Steuerung 13 oder direkt am Elektromotor M angeordnet ist, und beispielsweise induktive Blindleistung mittels kapazitiver Verbraucher ausgleicht.

Bei einer nicht gezeigten Alternative zu den Fig. 2 und 3 erfolgt die Verstellung des Solargenerators G mittels des Elektromotors M beispielsweise über mechanische Getriebe oder dergleichen, wobei auch dann dem Elektromotor M eine Blindleistungskompensationsanlage B zugeordnet ist.

Fig. 4 verdeutlicht einen Teil eines Windkraftgenerators G. Viele solche Windkraftgeneratoren G können ähnlich wie in Fig. 1 in einem einem Windkraftwerk K zugeordneten Feld F installiert sein (Offshore oder an Land). Der Windkraftgenerator G weist beispielsweise eine Windkraftturbine (mit horizontaler oder vertikaler Achse) mit einem Rotor 14 und Rotorblättern 15 auf. Der Rotor 14 treibt einen Generator 17, der über das Leitungssystem 3 mit der Kraftwerkszentrale Z verbunden ist, während zur Verstellung zumindest der Rotorblätter 15 (z. B. in den Wind oder aus dem Wind, um eine bestimmte Drehzahl zu halten oder stehen zu bleiben) ein Elektromotor M vorgesehen ist, der an die Stromleitung 4 eines Niederspannungsnetzes angeschlossen ist.

Das Niederspannungsnetz mit den Stromleitungen 4 kann z. B. mit einer Betriebsspannung zwischen etwa 100 bis 450 Volt bei einer Frequenz von etwa 50 bis 60 Hz betrieben werden.

Der Elektromotor ist auch in Fig. 4 zweckmäßig ein Drehstrommotor, dem eine Einzelkompensation oder Blindleistungskompensationsanlage B zugeordnet ist, und zwar möglichst nahe am Elektromotor M. Der Elektromotor M, im Falle beispielsweise einer elektrohydraulischen Verstellung zumindest der Rotorblätter 15, ist zweckmäßig zusammen mit dem Generator 17 in einer Turbinengondel 16 installiert, zweckmäßig in einem elektrohydraulischen Motorpumpenaggregat 8, und ist gegebenenfalls ein Unterölmotor.

Über das elektrohydraulische Motorpumpenaggregat 8 könnte auch eine Bremseinrichtung des Generators 17 und/oder Rotors 14 und/oder Drehverstellung der Turbinengondel 16 gesteuert werden. Die Turbinengondel 16 ist, zweckmäßig um eine vertikale Achse drehbar, auf einem Turm 20 installiert, der im Boden oder am Meeresgrund verankert ist.

Fig. 5 verdeutlicht eine Ausführungsform einer Blindleistungskompensationsanlage B (z. B. einer Einzelkompensation) für den Elektromotor M. Als kapazitive Verbraucher Kondensatoren 19 Wicklungen 18 des Elektromotors M parallel geschaltet. Die Kondensatoren 19 können als aktive Blindleistungsfilter fungieren, die beispielsweise einen kapazitiven Blindstrom aufnehmen, der dem üblicherweise induktiven Blindstrom des Elektromotors M entgegengesetzt gerichtet ist und ihn um bis zu etwa 98% aufhebt. Durch die Blindleistungskompensationsanlage B pendelt gegebenenfalls Blindstrom zum großen Teil nur zwischen dem Elektromotor M und der Blindleistungskompensationsanlage B, wobei die Stromleitungen 4 entlastet bleiben und für einen bestimmten Leistungsbedarf relativ kleinen Querschnitt haben können, was bei dem viele Hunderte oder sogar Tausende Kilometer Stromleitungen 4 umfassenden Niederspannungsnetz des Solar- oder Windkraftwerks K für große Stromleistungen z. B. 200 MW bis 1000 MW Einsparungen von vielen Hunderten Tonnen Kupfer ermöglicht.

## Patentansprüche

1. Solar- oder Windkraftwerk (K), mit wenigstens einer zumindest einem Feld (F) mit einer Vielzahl Solar- oder Windgeneratoren (G) zugeordneten Kraftwerkszentrale (Z), wobei die Solar- oder Windgeneratoren (G) zumindest zur Generatorverstellung Elektromotoren (M) aufweisen, die über Kupfer enthaltende Stromleitungen (4) in einem Niederspannungsnetz entweder mit der Kraftwerkszentrale (Z) und/oder einer zentralen Stromversorgung (S) verbunden sind, **dadurch gekennzeichnet, dass** im Feld (F) bei jedem Elektromotor (M) oder jeweils einer Gruppe örtlich benachbarter Elektromotoren (M) eine Blindleistungskompensationsanlage (B) vorgesehen ist.

2. Solar- oder Windkraftwerk nach Anspruch 1, **dadurch gekennzeichnet, dass** die Elektromotoren (M) dreiphasige Drehstrommotoren (10) sind, und dass für jede Phase als aktiver Blindleistungsfilter zumindest ein Kondensator (19) einer Motorwicklung (18) parallel geschaltet ist und einen kapazitiven Verbraucher der Blindleistungskompensationsanlage (B) bildet.

3. Solar- oder Windkraftwerk nach Anspruch 1, **dadurch gekennzeichnet, dass** der Generator (G) ein Solargenerator mit wenigstens einem über den Elektromotor (M), vorzugsweise elektrohydraulisch, verstellbaren, an wenigstens einem Antriebspylonen (2) montierten Parabolspiegel (1) oder Solarpaneel ist, und dass der Elektromotor (M) mit der Blindleistungskompensationsanlage (B) am Antriebspylonen (2) installiert ist.

4. Solar- oder Windkraftwerk nach Anspruch 1, **dadurch gekennzeichnet, dass** der Generator (G) eine Windkraftturbine zumindest mit vom Elektromotor (M), vorzugsweise elektrohydraulisch, verstellbaren Rotorblättern (15) eines Rotors (14) ist, und dass der Elektromotor (M) mit der Blindleistungskompensationsanlage (B) in einer den Rotor (14) lagernden Turbinengondel (16) installiert ist.

5. Solar- oder Windkraftwerk nach Anspruch 3 oder 4, **dadurch gekennzeichnet, dass** der Elektromotor (M) ein Unterölmotor in einem elektrohydraulischen Motorpumpenaggregat (8) ist, und dass als Blindleistungskompensationsanlage (B) zumindest Kondensatoren (19) an, oder in oder bei dem Motorpumpenaggregat (8) angeordnet sind.

6. Solar- oder Windkraftwerk nach wenigstens einem der vorhergehenden Ansprüche, **dadurch gekennzeichnet, dass** das Feld (F) mit dem Niederspannungsnetz der Stromleitungen (4) eine Fläche von bis zu etwa 50 km² bedeckt.

7. Solar- oder Windkraftwerk nach Anspruch 1, **dadurch gekennzeichnet, dass** der Elektromotor (M) eine Leistungsaufnahme bis zu etwa 1,5 kW hat.

8. Solar- oder Windkraftwerk nach wenigstens einem der vorhergehenden Ansprüche, **dadurch gekennzeichnet, dass** mittels der Blindleistungskompensationsanlage (B) ein Leistungsfaktor (Kosinus des Phasenverschiebungswinkels ϕ), bis maximal etwa 0,98 eingestellt ist, und dass vorzugsweise das Niederspannungsnetz in den Stromleitungen (4) mit einer Betriebsspannung zwischen etwa 120 bis 450 Volt und einer Frequenz von etwa 50 bis 60 Hz betreibbar ist.

9. Solar- oder Windkraftwerk nach wenigstens einem der vorhergehenden Ansprüche, **dadurch gekennzeichnet, dass** die Blindleistungskompensationsanlage (B) an einer Steuerplatine einer Motorsteuerung (13) angeordnet ist.

10. Solar- oder Windkraftwerk nach Anspruch 1, **dadurch gekennzeichnet, dass** in der einer Blindleistungskompensationsanlage (B) zugeordneten Gruppe Elektromotoren (M) die Elektromotoren (M) jeweils zugleich betreibbar sind.
